# EUROPÄISCHE PATENTSCHRIFT

(11) **EP 1 614 172 B1**
(45) Veröffentlichungstag und Bekanntmachung des Hinweises auf die Patenterteilung: **22.11.2006**
(21) Anmeldenummer: 04725906.4
(22) Anmeldetag: 06.04.2004
(51) Int. Cl.: H01M 8/02, H01M 8/24

(54) **BRENNSTOFFZELLE UND BRENNSTOFFZELLENSTAPEL MIT ÄUSSERER MEDIENZUFÜHRUNG**
FUEL CELL AND A STACK OF FUEL CELLS COMPRISING EXTERNAL MEDIA SUPPLIES
PILE A COMBUSTIBLE ET EMPILEMENT DE PILES A COMBUSTIBLE AVEC ALIMENTATION D'AGENT EXTERNE

(30) Priorität: 06.04.2003 DE 10315601
(43) Veröffentlichungstag der Anmeldung: 11.01.2006
(73) Patentinhaber: Proton Motor Fuel Cell GmbH, 82319 Starnberg (DE)
(72) Erfinder: KRAFT, Jürgen, 81241 München (DE); PASTOR, NIGORRA, Pere Antoni, 72074 Tübingen (DE); HEIDELBERG, Götz, 82319 Starnberg (DE)
(74) Vertreter: Klunker . Schmitt-Nilson . Hirsch
(86) Internationale Anmeldenummer: PCT/EP2004/003676
(87) Internationale Veröffentlichungsnummer: WO 2004/091025

(56) Entgegenhaltungen:
- EP-A- 0 620 609
- EP-A- 0 642 185
- EP-A- 1 291 946
- WO-A-96/17396
- DE-A- 10 048 331
- DE-C- 10 013 900
- GB-A- 2 178 223
- US-A- 3 575 719
- US-A1- 2002 027 073

## Beschreibung

Gegenstand der Erfindung ist ein Brennstoffzellentapel aus mehreren Brennstoffzellen (2) die jeweils aufweisen
(a) eine Polymerelektrolyt-Membran;
(b) eine erste Gasdiffusionselektrode auf der Anodenseite der Membran;
(c) eine zweite Gasdiffusionselektrode auf der Kathodenseite der Membran;
(d) eine erste Katalysatorbelegung in dem Übergangsbereich zwischen der Membran und der ersten Gasdiffusionselektrode;
(e) eine zweite Katalysatorbelegung in dem Übergangsbereich zwischen der Membran und der zweiten Gasdiffusionselektrode;
(f) eine erste elektrisch leitende Platte auf der der Membran entgegengesetzten Seite der ersten Gasdiffusionselektrode, wobei die erste Platte eine Strömungskanalanordnung für einen oxidierbaren, ersten Reaktanden aufweist;
(g) eine zweite elektrisch leitende Platte auf der der Membran entgegengesetzten Seite der zweiten Gasdiffusionselektrode, wobei die zweite Platte eine Strömungskanalanordnung für einen reduzierbaren, zweiten Reaktanden aufweist;
(h) wobei im Bereich des Übergangs zwischen (1) dem Perimeter der Anordnung aus Membran, erster Gasdiffusionselektrode und zweiter Gasdiffusionselektrode, und (2) der ersten und der zweiten Platte ein Randelement vorgesehen ist,
wobei der Brennstoffzellenstapel (60) folgende Merkmale besitzt:
(i) die mehreren Brennstoffzellen (2) sind mit im wesentlichen parallel zueinander liegenden Membranen (8) aneinander gesetzt, wobei sich zwischen zwei benachbarten Anordnungen (18) aus Membran, erster Gasdiffusionselektrode und zweiter Gasdiffusionselektrode jeweils ein Plattenbauteil befindet, welches für eine der zwei anschließenden Brennstoffzellen (2) eine erste Platte (4) darstellt und für die andere der zwei anschließenden Brennstoffzellen (2) eine zweite Platte (14) darstellt;
(k) der Brennstoffzellenstapel (60) ist von demjenigen Typ, bei dem mindestens einer der folgenden vier Räume
   (k1) erster Zuführungsraum für Mediumströme in die Strömungskanalanordnungen (42) der ersten Platten (4) der betreffenden Brennstoffzellen (2) hinein;
   (k2) erster Abführungsraum für Mediumströme aus den Strömungskanalanordnungen (42) der ersten Platten (4) der betreffenden Brennstoffzellen (2) heraus,
   (k3) zweiter Zuführungsraum für Mediumströme in die Strömungskanalanordnungen (44) der zweiten Platten (14) der betreffenden Brennstoffzellen (2) hinein,
   (k4) zweiter Abführungsraum für Mediumströme aus den Strömungskanalanordnungen (44) der zweiten Platten (14) der betreffenden Brennstoffzellen (2) heraus,
   sich an einer Seite des Brennstoffzellenstapels für mindestens eine Teilanzahl der Brennstoffzellen des Brennstoffzellenstapels außen vor den betreffenden, nach außen gerichteten Stirnseiten (20; 22) der betreffenden Brennstoffzellen (2) erstreckt, wobei die dem betreffenden Raum zugeordneten Mediumströme quer zu den betreffenden Stirnseiten (20; 22) der betreffenden Randelemente der betreffenden Brennstoffzellen (2) strömen;
(l) für den betreffenden Raum weist bei den betreffenden Brennstoffzellen (2) jeweils im Bereich des Übergangs zwischen dem Randelement (16) und der betreffenden Platte (4; 14) mindestens einer der Bestandteile
   (l1) Randelement (16),
   (l2) Platte (4; 14) in ihrem Randstreifen,
   an mindestens einer Stelle eine Ausnehmung auf, die eine lokale Verringerung der Dicke des betreffenden Bestandteils - gemessen rechtwinklig zu der Erstreckungsebene der Membran (8)- darstellt, derart dass eine Strömungspforte (50; 52; 54) zwischen dem betreffenden Raum und der Strömungskanalanordnung (42; 44) der betreffenden Platte (4; 14) gebildet ist;
(m) wobei das unter (I) genannte Randelement (16) mindestens eines der folgenden Ausbildungsmerkmale aufweist:
   (m1)das Randelement (16) besitzt mindestens in dem Bereich, wo die Ausnehmung positioniert ist, so viel Steifigkeit, dass es die Ausnehmung ohne erhebliche Verformung überspannt,
   (m2)das Randelement (16) ist in dem Bereich, wo die Ausnehmung positioniert ist, mit einem Stabilisierungselement (80) versehen, so dass es die Ausnehmung ohne erhebliche Verformung überspannt.

Brennstoffzellen mit den Merkmalen (a) bis (h) sind bekannt.

Die erfindungsgemäße Brennstoffzelle kann eine Polymerelektrolyt-Membran aus den bekannten und am Markt erhältlichen Materialien aufweisen. Als ein Beispiel sei eine Membran aus NAFION (eingetragene Marke) genannt. - Bei der erfindungsgemäßen Brennstoffzelle können Gasdiffusionselektroden bekannter Ausführungen eingesetzt sein; besonders bevorzugt sind Gasdiffusionselektroden gemäß dem deutschen Patent 195 44 323, die ein verdichtetes und homogen mit Ruß und Polytetrafluorethylen imprägniertes Kohlefaservlies aufweisen. - Bei der erfindungsgemäßen Brennstoffzelle können bekannte erste und zweite Katalysatorbelegungen vorhanden sein. In der Regel finden Edelmetallkatalysatoren Verwendung, wobei der Katalysator für die erste Katalysatorbelegung und der Katalysator für die zweite Katalysatorbelegung unterschiedlich sein können. Häufig liegen die Katalysatorbelegungen in der Form vor, dass sie beidseitig auf die Membran aufgebracht worden sind, ehe die Membran mit den Gasdiffusionselektroden und schließlich den elektrisch leitenden Platten zusammengebaut wird. Statt des Begriffs "Katalysatorbelegung" kann in der gesamten vorliegenden Anmeldung auch den Begriff "Katalysatorschicht" eingesetzt werden, da es sich tatsächlich um eine poröse Schicht aus Trägerpartikeln, auf denen Katalysatorpartikel sitzen, handelt. - Bei der erfindungsgemäßen Brennstoffzelle können elektrisch leitende Platten bekannter Konstruktion eingesetzt sein. Häufig bestehen die Platten aus einem Material auf Graphitbasis. Die Strömungskanalanordnung (häufig als flow field bezeichnet) ist häufig in Form von durch seitliche Stege voneinander getrennten, rinnenartigen Kanälen vorgesehen; sie dient dazu, einen zugeführten Mediumstrom im wesentlichen gleichmäßig über die Fläche der betreffenden Platte zu verteilen und nach der chemischen Reaktion geordnet wieder abzuführen. Aus weiter unten noch deutlicher werdenden Gründen wird die elektrisch leitende Platte häufig "Bipolarplatte" genannt. - Die Anordnung aus Membran, erster Gasdiffusionselektrode und zweiter Gasdiffusionselektrode (es gilt in der gesamten vorliegenden Anmeldung, dass diese Anordnung naturgemäß auch die erste Katalysatorbelegung und die zweite Katalysatorbelegung enthält) muss an ihrem Perimeter in mehrfacher Hinsicht abgedichtet sein. So darf kein erster Reaktand und kein zweiter Reaktand nach außen austreten; außerdem muss ein Mischen von erstem Reaktanden und zweitem Reaktanden über das Stirnende der Membran hinweg verhindert werden. Es ist bekannt, an dem Perimeter ein Randelement vorzusehen, welches mindestens einen Teil dieser Dichtungsaufgaben übernimmt oder daran beteiligt ist.

Die erfindungsgemäße Brennstoffzelle wird vorzugsweise mit Wasserstoff als erstem Reaktanden und vorzugsweise mit Luft als zweitem Reaktanden (bzw. dem in der Luft enthaltenen Sauerstoff als zweitem Reaktanden) betrieben. Es ist aber insbesondere auch möglich, als ersten Reaktanden ein Gas oder eine Flüssigkeit vorzusehen, welche erst bei der chemischen Reaktion in dem Übergangsbereich zwischen der Membran und der ersten Gasdiffusionselektrode Wasserstoff liefert; als Beispiel sei Methanol genannt.

Mit dem Merkmal (i) wird ein Brennstoffzellentyp umschrieben, der - wie es von Fachleuten auf dem Gebiet der Brennstoffzellen häufig genannt wird -eine externe Medienzuführung und/oder Medienabführung besitzt, und zwar mindestens für eine der Medienzuführungen (Medienzuführung für den ersten Reaktanden und Medienzuführung für den zweiten Reaktanden) und/oder für mindestens eine der Medienabführungen (Medienabführung von der Strömungskanalanordnung der ersten Platte und Medienabführung von der Strömungskanalanordnung der zweiten Platte). Dabei wird in Merkmal (i) von vier "Mediumströmen" gesprochen, um klar zu machen, dass nicht nur reiner erster Reaktand und reiner zweiter Reaktand zugeführt werden, sondern in der technischen Praxis in einem großen Teil der Fälle Medienströme zugeführt werden, die nicht nur aus einem Reaktanden bestehen. Ein Gegenbeispiel ist allerdings, wenn der erste Mediumstrom (in die Strömungskanalanordnung der ersten Platte hinein) Wasserstoff ist; in diesem konkreten Fall handelt es sich in der Regel um technisch reinen Wasserstoff. Wenn der zweite Mediumstrom (in die Strömungskanalanordnung der zweiten Platte hinein) Luft ist, enthält er zwar den ersten Reaktanden Sauerstoff, aber auch weitere Bestandteile insbesondere Stickstoff. Der dritte Mediumstrom (aus der Strömungskanalanordnung der ersten Platte heraus) enthält in der Regel einen Anteil von nicht chemisch umgesetztem, ersten Reaktanden, aber auch Wasser (Befeuchtungswasser und chemisch gebildetes Wasser), welches aus der Brennstoffzelle abgeführt wird, und minimale Anteile Stickstoff, der aus dem ersten Mediumstrom die Membran passiert hat. Der vierte Mediumstrom (aus der Strömungskanalanordnung der zweiten Platte heraus) enthält in der Regel überschüssigen zweiten Reaktanden, ggf. Bestandteile des zweiten Mediumstroms, die nicht chemisch umgesetzt worden sind, und Wasser (Befeuchtungswasser und durch chemische Reaktion gebildetes Wasser).

Bei der erfindungsgemäßen Brennstoffzelle ist für mindestens einen der genannten vier Mediumströme die externe Zuführung bzw. Abführung verwirklicht. Bevorzugt ist allerdings, wenn für mehrere der Mediumströme die externe Zuführung bzw. Abführung verwirklicht ist. Ganz besonders bevorzugt ist der Fall, dass für alle vier Mediumströme die externe Zuführung bzw. Abführung verwirklicht ist. Dies führt zu konstruktiv besonders günstigen Ausführungen der Brennstoffzelle, siehe auch die Ausführungsbeispiele weiter unten.

Es wird betont, dass der Begriff "Abführungsraum" auch den Fall einschließt, dass dort kein von einer Wand umschlossener und von der anschließenden Umgebung abgetrennter Raum vorhanden ist, sondern der abgeführte Mediumstrom in einen unabgegrenzten Raum vor der dortigen Stirnseite der Brennstoffzelle abgegeben wird. Ein typisches Beispiel hierfür ist das Abführen des vierten Mediumstroms durch Abgabe an die Umgebung, ohne den vierten Mediumstrom durch hierfür vorgesehene Bauteile zu umschließen.

Durch das Merkmal (k) wird die Ausführung umschrieben, dass mindestens eine Strömungspforte (zwischen einem der vier genannten Räume und der Strömungskanalanordnung einer der Platten, wobei die Strömungsrichtung entweder aus dem Raum in die Strömungskanalanordnung oder aus der Strömungskanalanordnung in den Raum gerichtet sein kann) durch Vorsehen einer lokalen Ausnehmung in dem Randelement und/oder dem Randstreifen der betreffenden Platte ausgebildet ist. Anstatt durch gesonderte Einbauten für eine Strömungsverbindung zwischen dem betreffenden Raum und der betreffenden Strömungskanalanordnung zu sorgen, wird also auf besonders einfache Weise durch eine lokale Ausnehmung an dem Randelement und/oder an dem Randstreifen der betreffenden Platte die Strömungsverbindung geschaffen.

Es wird betont, dass dann, wenn für mehrere der vier Mediumströme jeweils mindestens eine Strömungspforte vorhanden sein soll, diese Strömungspforten vorzugsweise sinnvoll an unterschiedlichen Stellen des Perimeters der Brennstoffzelle vorgesehen werden. Die Ausführungsbeispiele weiter unten werden dies noch deutlicher vor Augen führen.

Durch das Merkmal (I) wird umschrieben, dass bei dem Randelement mindestens in dem Bereich, wo die Ausnehmung (sei es in dem Randelement oder sei es in dem Randstreifen der Platte) positioniert ist, hinreichend viel Steifigkeit vorhanden ist, dass das Randelement oder daran anschließende Bereiche der Gasdiffusionselektroden nicht übermäßig in die Ausnehmung hinein gedrückt werden und dass die der Ausnehmung entgegengesetzte Seite des Randelements nicht so viel an Anpresskraft oder Klebebindung verliert, dass dort die Dichtigkeit leidet. In diesem Zusammenhang muss man sich vor Augen halten, dass die genannten Bestandteile der Brennstoffzelle (Membran, zwei Gasdiffusionselektroden, zwei Platten) in einer Richtung, die rechtwinklig zu der Ebene der Membran verläuft, normalerweise mit einer nicht unerheblichen Kraft zusammengespannt werden, allein schon um die weiter oben geschilderte Abdichtung am Perimeter zu erreichen. Im Stand der Technik ist das Randelement in vielen Fällen (zum Erreichen einer guten Abdichtfunktion) weich, so dass ohne die erfindungsgemäße Maßnahme gemäß Merkmal (I) das Randelement lokal weit in die Ausnehmung hinein gedrückt würde. Auch der restliche Materialaufbau, ohne das Randelement, des Perimeters der Anordnung aus Membran, erster Gasdiffusionselektrode und zweiter Gasdiffusionselektrode ist in aller Regel weich.

Durch die Erfindung wird die Lehre gegeben, den Gefahren, die sich durch Schaffung der betreffenden Strömungspforte durch eine lokale Ausnehmung an dem Randelement und/oder an dem Randstreifen der betreffenden Platte ergeben, dadurch entgegenzuwirken, dass das Randelement mindestens im Bereich der Ausnehmung mit hinreichend viel Eigensteifigkeit ausgeführt wird, oder dass das Randelement in dem Bereich der Ausnehmung mit einem Stabilisierungselement versteift wird.

Vorzugsweise ist das Randelement ringsum mit der genannten Steifigkeit ausgeführt, so dass man nicht wechselnd steifere Abschnitte und weniger steife Abschnitte hat. Als bevorzugte Ausführungen für das Stabilisierungselement seien eine dünne Stabilisierungswand aus flächigem Kunststoff oder aus flächigem, korrosionsbeständigen Metall und eine Faserverstärkungslage genannt; es bestehen viele weitere Ausführungsmöglichkeiten.

Die erfindungsgemäße Brennstoffzelle zeichnet sich insbesondere dadurch aus, dass die Medienzuführung und die Medienabführung auf eine ganz einfache Weise ausgeführt sind. Zusätzlicher Platzbedarf ist vermieden. Die Strömungspforten lassen sich mit geringem Aufwand herstellen. Die Platten lassen sich leichter herstellen als solche mit inneren Durchbrüchen, wie sie für Brennstoffzellen mit innerer Medienzuführung oder Medienabführung benötigt werden.

In vielen Fällen muss die mindestens eine Strömungspforte eine - in Längsrichtung des Randelements gemessene - Länge von mehr als 10 mm haben, um angesichts der verfügbaren Maximaldicke den erforderlichen Strömungsquerschnitt zu haben. Die Anforderungen an die geschilderte Steifigkeit (sei es des Randelements selbst oder sei es vermittelt durch das Stabilisierungselement) lassen sich im Fall von Strömungspforten größerer Länge dadurch sehr erheblich reduzieren, dass die betreffende Strömungspforte durch mindestens einen Abstützsteg in mehrere Teillängen unterteilt ist. In der Regel strebt man an, dass die Teillängen jeweils unter 10 mm sind, bei Ausnehmungen geringerer Tiefe vorzugsweise unter 5 mm. Vorzugsweise ist der Abstützsteg bzw. die Abstützstege integral mit der betreffenden Platte oder integral mit dem Randelement oder Teil eines dem Bereich der Ausnehmung vorgesetzten Abstützelements. Ganz besonders bevorzugt ist es, den Abstützsteg bzw. die Abstützstege mit dem weiter oben angesprochenen Stabilisierungselement zu vereinigen.

Insgesamt wird angestrebt, die Strömungspforten mit möglichst kleiner Länge auszubilden, nicht nur wegen der Kleinhaltung der Verformung des Randelements sondern auch wegen der gewünschten Unterbringung mehrerer Zuführungsräume bzw. Abführungsräume nebeneinander an einer Seite der Brennstoffzelle.

Vorzugsweise befinden sich der erste Zuführungsraum und der erste Abführungsraum an gegenüberliegenden Seiten der Brennstoffzelle. Vorzugsweise befinden sich der zweite Zuführungsraum und der zweite Abführungsraum an gegenüberliegenden Seiten der Brennstoffzelle. In beiden Fällen wird also der betreffende Mediumstrom quer über die Fläche der betreffenden Gasdiffusionselektrode hinübergeführt. Alternativen, insbesondere den betreffenden Mediumstrom im Prinzip U-förmig über die Fläche der betreffenden Gasdiffusionselektrode zu führen, d. h. den Zuführungsraum und den Abführungsraum an der gleichen Seite der Brennstoffzelle vorzusehen, oder den Mediumstrom mit Abwinklung um z. B. 90° zu führen, sind möglich.

Besonders bevorzugt ist eine Ausführung, bei der an einer ersten Seite der Brennstoffzelle der erste Zuführungsraum und der zweite Abführungsraum vorgesehen sind, während sich an der gegenüberliegenden, zweiten Seite der Brennstoffzelle der zweite Zuführungsraum und der erste Abführungsraum befinden. Auf diese Weise sind zwei der vier Seiten der Brennstoffzelle frei von Zuführung und Abführung gehalten. Die zwei Mediumströme strömen - vereinfacht ausgedrückt - im Gegenstrom über die Flächen der zwei Gasdiffusionselektroden.

Statt jeweils nur einer Strömungspforte für den betreffenden Mediumstrom kann man auch mehrere beabstandete Strömungspforten jeweils für die Zuströmung und/oder für die Abströmung vorsehen. In diesem Fall kann jede einzelne Strömungspforte mit geringerer Länge ausgeführt werden.

Das Randelement ist vorzugsweise ein integral angebrachter Bestandteil der Anordnung aus Membran, erster Gasdiffusionselektrode und zweiter Gasdiffusionselektrode. Es ist allerdings alternativ möglich, mit einem separat gefertigten Randelement zu arbeiten, welches danach mit der genannten Anordnung oder mit mindestens einer der Platten zusammengefügt wird. Das Randelement lässt sich auch in zwei Teilen für die entgegengesetzten Seiten der genannten Anordnung herstellen.

Es ist bevorzugt, wenn das Randelement in einem Randstreifen der Anordnung aus Membran, erster Gasdiffusionselektrode und zweiter Gasdiffusionselektrode die Poren der ersten Gasdiffusionselektrode und der zweiten Gasdiffusionselektrode füllt. Auf diese Weise wird mindestens ein Teil der dort erforderlichen, weiter oben angesprochenen Abdichtfunktion durch das Material des Randelements erfüllt. Es lässt sich besonders elegant ein Randelement schaffen, welches überhaupt keinen oder nur wenig zusätzlichen Platzbedarf über die genannte Anordnung hinaus hat. Das Randelement lässt sich besonders elegant mit der weiter oben angesprochenen Eigensteifigkeit ausbilden.

Als Material für das Randelement ist Kunststoff bevorzugt. Ganz besonders bevorzugt ist es, mit einem Kunstharz zu arbeiten (welches, wenn gewünscht, mit hinreichend niedriger Viskosität in die Poren der Gasdiffusionselektroden eingebracht werden kann), welches nach der Aufbringung am Perimeter der genannten Anordnung ausgehärtet wird. Besonders bevorzugt sind ein Epoxidharz, ein Silicon, ein Polyesterharz. Diese sind mit breiter Palette von Eigenschaften im Handel erhältlich, lassen sich gut verarbeiten, und führen im Fall von Epoxidharz und Polyesterharz zu der gewünschten Eigensteifigkeit des Randelements.

Das Randelement lässt sich in einer derjenigen Weisen ausführen, die in der Schrift DE 197 03 214 A beschrieben sind. Es wird allerdings betont, dass es bei der vorliegenden Erfindung nicht zwingend erforderlich ist, dass die Membran und die erste Gasdiffusionselektrode und die zweite Gasdiffusionselektrode gemeinsam an der betreffenden Stirnseite enden. Man kann z. B. mit der Alternative arbeiten, dass die Membran stirnseitig ein Stück vorsteht. Es ist möglich, das Randelement an dem überstehenden Membranbereich vorzusehen oder mit diesem zusammenwirken zu lassen.

Es ist bevorzugt, das Randelement zugleich als Dichtelement zum Dichten der Übergänge zwischen dem Randelement und der ersten Platte und der zweiten Platte auszubilden. So könnte man z. B. mit einem Randelement arbeiten, welches einen Kern aus versteifendem Material hat, aber an der der ersten Platten zugewandten Seite und an der der zweiten Platte zugewandten Seite mit einer Auflage aus vergleichsweise weichem Material versehen ist.

Weiterer Gegenstand der Erfindung ist ein Brennstoffzellenstapel, der aus mehreren Brennstoffzellen der in der vorliegenden Anmeldung offenbarten Art aufgebaut ist, wobei sich jeweils zwischen zwei benachbarten Anordnungen aus Membran, erster Gasdiffusionselektrode und zweiter Gasdiffusionselektrode ein Plattenbauteil befindet, welches für eine der zwei anschließenden Brennstoffzellen eine erste Platte darstellt und für die andere der zwei anschließenden Brennstoffzellen eine zweite Platte darstellt. Das Plattenbauteil gehört somit gleichsam mit etwa einer Hälfte einer Brennstoffzelle an und mit etwa der anderen Hälfte der benachbarten Brennstoffzelle. Dies erklärt den gängigen Begriff "Bipolarplatte". Es wird betont, dass der Begriff "Plattenbauteil" die folgenden zwei Alternativen umfasst:
- Integrales Plattenbauteil, welches auf einer Seite eine erste Strömungskanalanordnung und auf der anderen Seite eine zweite Strömungskanalanordnung aufweist;
- Anordnung von zwei aneinandergesetzten, separat hergestellten Platten, nämlich einer ersten Platte und einer zweiten Platte.

Es ist ein sehr wesentlicher Vorteil der Erfindung, dass die externe Medienzuführung, die externe Medienabführung und ggf. die externe Kühlmittelzuführung und -abführung in ihrer Größe, insbesondere Strömungsquerschnitt, einfach an die Anzahl der Brennstoffzellen im Brennstoffzellenstapel angepasst werden kann.

Vorzugsweise erstreckt sich mindestens einer der vier genannten Räume für mindestens eine Teilanzahl der Brennstoffzellen in Längsrichtung des Stapels. Stärker bevorzugt gilt diese Aussage für zwei der vier genannten Räume oder drei der vier genannten Räume oder alle vier der vier genannten Räume. Der betreffend ausgebildete Raum oder die betreffend ausgebildeten Räume stellen langgestreckte Verteiler bzw. Sammler für den jeweiligen Mediumstrom dar.

Besonders bevorzugt ist es, wenn sich der genannte Raum bzw. die genannten Räume über alle Brennstoffzellen des Stapels erstrecken. Bei dem erfindungsgemäßen Brennstoffzellenstapel kommen die weiter oben genannten Vorteile der erfindungsgemäß ausgebildeten, externen Mediumzufuhr bzw. Mediumabfuhr besonders ausgeprägt zum Tragen. Die Mediumzufuhr bzw. die Mediumabfuhr ist nicht mit komplexen Abdichtaufgaben innerhalb des eigentlichen Stapels belastet. Die Verteilung bzw. die Sammlung der Mediumströme ist baulich sehr einfach.

Vorzugsweise ist mindestens einer der vier genannten Räume durch ein langgestreckt-wannenförmiges Bauteil gebildet, das mit seiner offenen Seite einen sich in Längsrichtung des Stapels erstreckenden Längsstreifen überdeckt, der Stirnseitenabschnitte (der Ausdruck "Abschnitte" deshalb, weil der Längsstreifen vorzugsweise weniger breit ist als die gesamte Stirnseite der betreffenden Brennstoffzellenseite) mindestens einer Teilanzahl der Brennstoffzellen enthält. Für die bevorzugte Anzahl der Räume und für die bevorzugte Länge des wannenförmigen Bauteils gilt das im vorhergehenden Absatz Gesagte. Es wird betont, dass das Bauteil auch zur gleichzeitigen Ausbildung mehrerer der vier genannten Räume gestaltet sein kann, so dass man gleichsam ein mehrfachwannenförmiges Bauteil vor sich hat.

Vorzugsweise befindet sich zwischen dem die offene Seite des langgestreckt-wannenförmigen Bauteils umschließenden Rand und den Stirnseiten der betreffenden Brennstoffzellen eine Dichtung oder eine dichtende Klebung. Die Dichtung oder die dichtende Klebung sind so ausgebildet, dass gewisse Niveauunterschiede, wie sie an den Stirnseiten der Mehrzahl von Brennstoffzellen normalerweise auftreten, ausgeglichen werden. Als beispielhafte Möglichkeit für das Material zur dichtenden Klebung sei eine Siliconraupe genannt.

Vorzugsweise sind zwei der vier genannten Räume an einer Seite des Brennstoffzellenstapels außen vor den Stirnseiten der betreffenden Brennstoffzellen positioniert und sind die zwei anderen der vier genannten Räume an der gegenüberliegenden Seite des Brennstoffzellenstapels außen vor den Stirnseiten der betreffenden Brennstoffzellen positioniert. Auf diese Weise lassen sich die zwei restlichen Seiten des Brennstoffzellenstapels von Mediumzuführung und Mediumabführung frei halten.

Vorzugsweise ist bei dem erfindungsgemäßen Brennstoffzellenstapel mindestens ein Teil der Brennstoffzellen mittels eines Kühlmittels gekühlt. Hierfür ist es bevorzugt, mindestens einen Teil der Plattenbauteile zum Durchströmtwerden mit einem gasförmigen oder flüssigen Kühlmittel auszubilden. Dies lässt sich besonders bequem ausführen, wenn das Plattenbauteil eine Doppelplatte ist, wie weiter oben angesprochen. Eine der Einzelplatten oder beide Einzelplatten können auf der der jeweiligen Membran abgewandten Seite eine Strömungskanalanordnung haben.

Es ist bevorzugt, zur Zuführung des Kühlmittels einen gemeinsamen dritten Zuführungsraum für mehrere Plattenbauteile, vorzugsweise für alle zu kühlenden Plattenbauteile, außen vor den Stirnseiten der Brennstoffzelllen vorzusehen. Noch stärker bevorzugt ist es, auch einen gemeinsamen dritten Abführungsraum außen vor den Stirnseiten der Brennstoffzellen vorzusehen. Ganz besonders bevorzugt ist es, den dritten Zuführungsraum und ggf. den dritten Abführungsraum an der Seite bzw. den Seiten des Brennstoffzellenstapels vorzusehen, wo sich auch die bisher beschriebenen Medienzuführungen bzw. Medienabführungen befinden, so dass nach wie vor zwei Seiten des Stapels von Zuführungen und Abführungen frei gehalten sind.

Weiterer Gegenstand der Erfindung ist eine Brennstoffzellenstapel-Anordnung, die mehrere der in der vorliegenden Anmeldung offenbarten Brennstoffzellenstapel aufweist, wobei die Brennstoffzellenstapel der Brennstoffzellenstapel-Anordnung mit im wesentlichen parallelen Längsachsen der Stapel angeordnet sind. Die einzelnen Brennstoffzellenstapel können, was besonders bevorzugt ist, mit horrizontaler Längsachse vorgesehen sein, alternativ mit vertikaler Längsachse. Das Gleiche gilt für einen einzelnen Brennstoffzellenstapel, auch wenn keine Brennstoffzellenstapel-Anordnung aus mehreren Brennstoffzellenstapeln vorhanden ist. Ganz besonders bevorzugt ist eine Brennstoffzellenstapel-Anordnung in Form einer vertikalen "Wand", die mehrere Brennstoffzellenstapel jeweils mit horizontaler Längsachse übereinander aufweist. Es ist möglich, mehrere dieser Wände, parallel zueinander und vorzugsweise mit möglichst geringem Abstand, vorzusehen. Im Fall von zwei Wänden kann man die Brennstoffzellenstapel in der einen Wand gleichsam spiegelbildlich zu den Brennstoffzellenstapeln in der anderen Wand ausbilden, so dass z. B. die Zufuhr der ersten Mediumströme gleichsam von dem Zwischenraum Doppelwand her erfolgt.

Bei der erfindungsgemäßen Brennstoffzellenstapel-Anordnung ist es bevorzugt, wenn in einer Gruppe von Brennstoffzellenstapeln diejenigen Seiten der Brennstoffzellenstapel, die einer Seite eines benachbarten Brennstoffzellenstapels zugewandt sind, von externen Zuführungsräumen und externen Abführungsräumen frei sind. Dies erlaubt eine für die technische Realität außerordentlich vorteilhafte, enge Nachbarschaft der Brennstoffzellenstapel. Es wird betont, dass dieses Aufbauprinzip der Brennstoffzellenstapel-Anordnung eine eigene Erfindung darstellt, auch losgelöst von der am Anfang der vorliegenden Anmeldung offenbarten Ausbildung der einzelnen Brennstoffzellen hinsichtlich der Strömungspforten und der Steifigkeit im Bereich der Strömungspforten.

Die Erfindung und bevorzugte Ausgestaltungen der Erfindung werden nachfolgend anhand von schematisiert zeichnerisch dargestellten Ausführungsbeispielen noch näher erläutert. Es zeigt:
- Fig. 1: eine Draufsicht auf die flächige Seite einer Brennstoffzelle;
- Fig. 2: einen Ausschnitt der Brennstoffzelle von Fig. 1, geschnitten längs II-II in Fig. 1;
- Fig. 3: einen Ausschnitt der Brennstoffzelle von Fig. 1, geschnitten längs III-III in Fig. 1;
- Fig. 4: als Alternative, einen Ausschnitt der Brennstoffzelle von Fig. 1, geschnitten längs IV-IV in Fig. 1;
- Fig. 5: eine perspektivische Darstellung eines Teils einer Anordnung aus Membran und zwei Gasdiffusionselektroden, einschließlich Randelement;
- Fig. 6: eine Ansicht eines Ausschnitts eines Brennstoffzellenstapels, gesehen auf eine der Seiten des Brennstoffzellenstapels;
- Fig.7: eine Ansicht eines Brennstoffzellenstapels, gesehen in Richtung der Achse des Stapels;
- Fig. 8: einen alternativen Brennstoffzellenstapel in einer Ansicht wie Fig. 7;
- Fig. 9: einen Ausschnitt aus einer Brennstoffzelle, gesehen gemäß Pfeil IX auf eine Stirnseite der Brennstoffzelle;
- Fig. 10: einen Ausschnitt aus einer Brennstoffzelle in alternativer Ausführungsform, gesehen gemäß Pfeil X auf eine Stirnseite der Brennstoffzelle;
- Fig. 11: eine horizontale Ansicht einer Brennstoffzellenstapel-Anordnung;
- Fig. 12: einen Ausschnitt einer Membran-Elektroden-Anordnung im Schnitt.

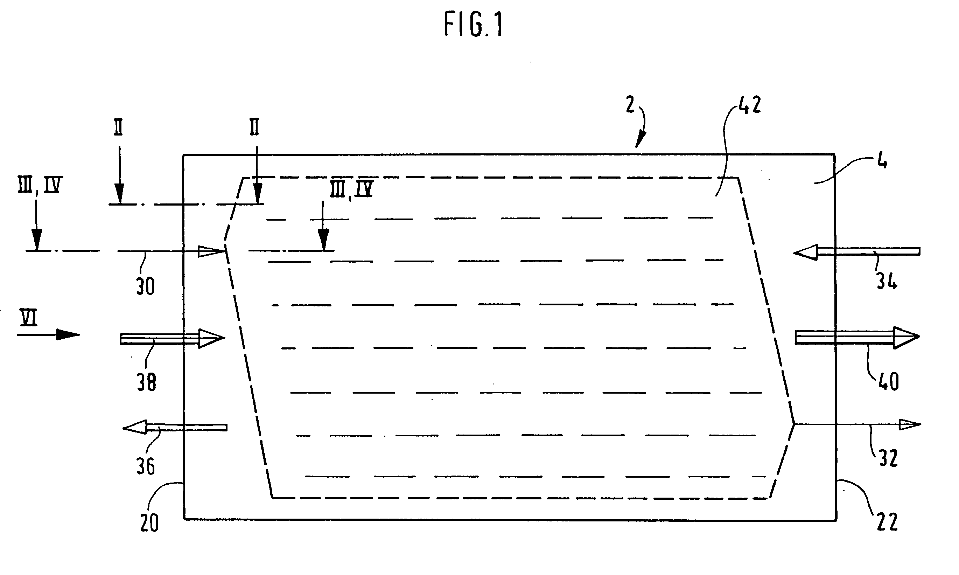

Fig. 1 zeigt eine Ansicht einer Brennstoffzelle 2, bei der eine Polymerelektrolyt-Membran, zwei Gasdiffusionselektroden und zwei elektrisch leitende Platten jeweils eine im wesentlichen rechteckige Form haben. Wenn die Brennstoffzelle 2 mit horizontaler Lage der Membran vorgesehen ist, stellt Fig. 1 eine Draufsicht von oben dar. Wenn die Brennstoffzelle 2 mit vertikaler Lage der Membran vorgesehen ist, stellt Fig. 1 eine horizontale Ansicht der Großfläche der Brennstoffzelle 2 dar.

Statt "Brennstoffzelle" wird im Folgenden kurz von "Zelle" gesprochen. Statt von "elektrisch leitende Platte" wird nachfolgend kurz von "Platte" gesprochen.

Konkret zeigt Fig. 1 eine erste Platte 4 der Zelle 2. An einer ersten Seite 20 der Zelle 2 (das ist die linke Querseite des Rechtecks in Fig. 1) ist mit einfachem Pfeil eine erste Mediumstrom-Zufuhr 30 eingezeichnet, mit doppeltem Pfeil eine zweite Mediumstrom-Abfuhr 36, und mit dreifachem Pfeil eine Kühlmittel-Zufuhr 38. An einer gegenüberliegenden, zweiten Seite 22 (das ist die Querseite des Rechtecks rechts in Fig. 1) sind mit einfachem Pfeil eine erste Mediumstrom-Abführung 32, mit zweifachem Pfeil eine zweite Mediumstrom-Zuführung 34, und mit dreifachem Pfeil eine Kühlmittel-Abführung 40 eingezeichnet. Man sieht, dass die obere Längsseite des Rechtecks und die untere Längsseite des Rechtecks frei von Zuführungen und Abführungen sind.

Hinter der Zeichnungsebene befinden sich die weiteren "Schichten" der Zelle 2, nämlich erste Gasdiffusionselektrode, erste Katalysatorbelegung, Membran, zweite Katalysatorbelegung, zweite Gasdiffusionselektrode, zweite Platte. Diese Teile sind in Fig. 1 nicht explizit sichtbar, weil sie sich hinter der Zeichnungsebene und hinter der sichtbaren, ersten Platte 4 befinden.

Mit unterbrochenen Linien 42 ist eine Strömungskanalanordnung 42 auf der dem Betrachter abgewandten Seite der ersten Platte 4 angedeutet. Die Strömungskanalanordnung 42 sorgt für eine gleichmäßige Verteilung des ersten Mediumstroms über die Fläche der Platte 4 und damit über die erste Gasdiffusionselektrode auf dem Weg von der Zuführung 30 zu der Abführung 32. Auch für den zweiten Mediumstrom (Zuführung 34, Abführung 36) und für den Kühlmittelstrom (Zuführung 38, Abführung 40) sind Strömungskanalanordnungen mit analoger Funktion, wenn auch gewünschtenfalls in im Detail anderer Ausführung, vorgesehen.

Man sieht, dass der erste Mediumstrom in Fig. 1 von links nach rechts, der zweite Mediumstrom in Fig. 1 von rechts nach links, und der Kühlmittelstrom in Fig. 1 von links nach rechts geht.

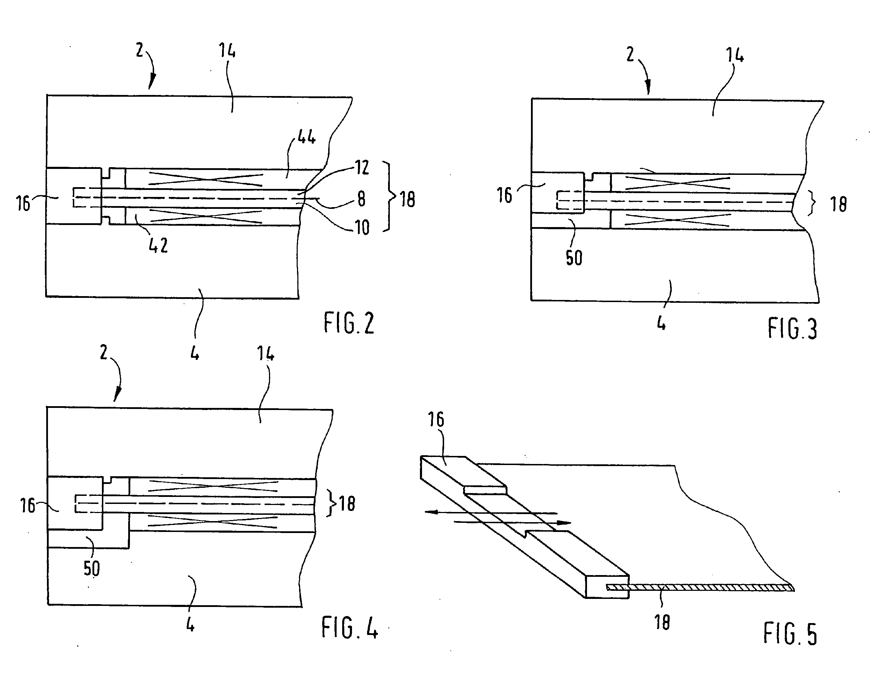

In Fig. 2 sieht man nun die Einzelteile der Zelle 2, nämlich erste Platte 4, Anordnung 6 aus Membran 8 und erster Gasdiffusionselektrode 10 und zweiter Gasdiffusionselektrode 12, sowie zweite Platte 14. Außerdem sieht man ein weiter unten noch genauer zu beschreibendes Randelement 16. Die erste Platte 4 hat auf ihrer der Membran 8 zugewandten Seite die bereits angesprochene Strömungskanalanordnung 42, von der man hier eine mit einem Kreuz gezeichnete Wand zwischen zwei Strömungskanälen sieht. Analog hat die zweite Platte 14 auf ihrer der Membran 8 zugewandten Seite eine zweite Strömungskanalanordnung 44.

Die genannte Anordnung aus den Teilen 8, 10, 12 wird im Folgenden kurz MEA ("Membrane Electrode Assembly" bzw. "Membran-Elektroden-Anordnung") genannt.

Fig. 2 ist ein Schnitt in einer Ebene, in der sich keine Strömungspforte zur Zufuhr oder zur Abfuhr eines Mediumstroms oder von Kühlmittel befindet. Das Randelement 16 ist durch Einbringen eines Kunstharzes in einen Formhohlraum, in den der Perimeter der MEA 18 eingelegt worden war, hergestellt worden. Das flüssige Kunstharz ist in die Poren des Perimeters der ersten Gasdiffusionselektrode 10 und der zweiten Gasdiffusionselektrode 12 bis hin zur Membran 8 eingedrungen. Der Formhohlraum, der insgesamt gleichsam die Form eines Bilderrahmens hat, it dicker als die MEA (wobei die Dicke rechtwinklig zur Fläche der Membran 8 gemessen wird), und die Stirnseite der MEA 18 geht nur bis zum -radial gesehen - mittleren Bereich des Randelements 16, so dass außen vor dieser Stirnseite das Randelement 16 noch ein Stück weiter geht. Nach dem Erhärten des Kunstharzes des Randelements 16 hat das Randelement 16 Eigensteifigkeit. Das Randelement 16 dichtet den Randbereich der ersten Gasdiffusionselektrode 10 und den Randbereich der zweiten Gasdiffusionselektrode 12 gegeneinander ab, so dass kein Mischen von Medien stattfinden kann. Das Randelement 16 ist mit den Platten 4 und 14 verklebt.

Fig. 3 zeigt einen Schnitt in einer Ebene, wo sich eine Strömungspforte 50 zum Zuführen des ersten Mediumstroms befindet. Diese Strömungspforte 50 ist dadurch geschaffen, dass das Randelement 16 lokal eine geringere Dicke hat als in den Bereichen ohne Strömungspforte. Dadurch entsteht eine besonders anschaulich in Fig. 5 sichtbare Ausnehmung 52 mit einer bestimmten (längs des Perimeters gemessenen) Länge. Auf einer Seite der MEA 18 bedeckt das Material des Randelements 16 die MEA 18 nur noch dünn.

Fig. 4 zeigt als Alternative die Möglichkeit, dass die Ausnehmung durch lokales Verringern der Dicke des Randbereichs der ersten Platte 4 geschaffen worden ist. Auch die Kombination beider Möglichkeiten ist möglich, d. h. Teil der Gesamt-Ausnehmung in dem Randelement 16 und anderer Teil der Gesamt-Ausnehmung in dem Randbereich der ersten Platte 4.

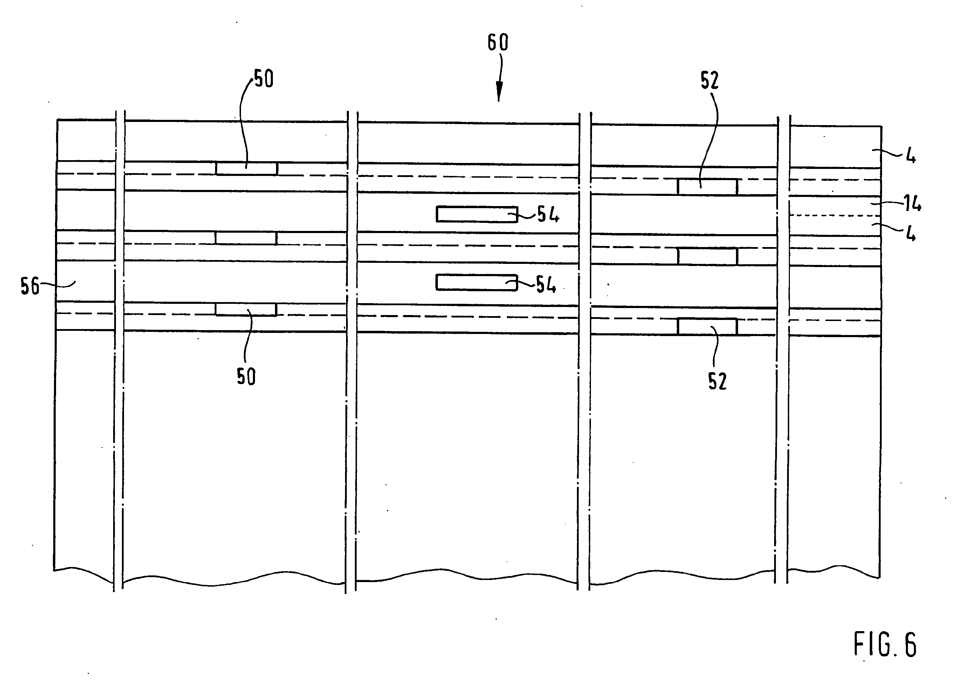

Fig. 6 veranschaulicht, wie die erfindungsgemäße Ausbildung dann bei einem Brennstoffzellenstapel 60, im Folgenden kurz "Stapel 60", aussieht. Alle Strömungspforten 50, die für den ersten Medienstrom vorgesehen sind, sind in einer im wesentlichen fluchtenden Reihe, die sich in Längsrichtung der Achse des Stapels 60 erstreckt, angeordnet. Das Gleiche gilt für die Strömungspforten 52 für den zweiten Mediumstrom. Und das Gleiche gilt für die Strömungspforten 54 für den Kühlmittelstrom. Die Strömungspforte 54 kann man z. B. dadurch ausbilden, dass das betreffende Plattenbauteil 56 eine Doppelplatte aus einer ersten Platte 4 und einer zweiten Platte 14 ist und dass an der Stelle der Strömungspforte 54 ein Ausnehmungspaar der Platten 4 und 14 vorhanden ist. Im Raum zwischen den Platten 4 und 14 befindet sich eine oder zwei Strömungskanalanordnungen.

Bei dem beschriebenen Ausführungsbeispiel ist der erste Mediumstrom bei der Zuführung 30 ein Strom von Wasserstoff, ist der zweite Mediumstrom bei der Zuführung 34 ein Strom von Luft, und ist der Kühlmittelstrom ein Strom von flüssigem, bei den Einsatztemperaturen nicht gefrierendem Kühlmittel.

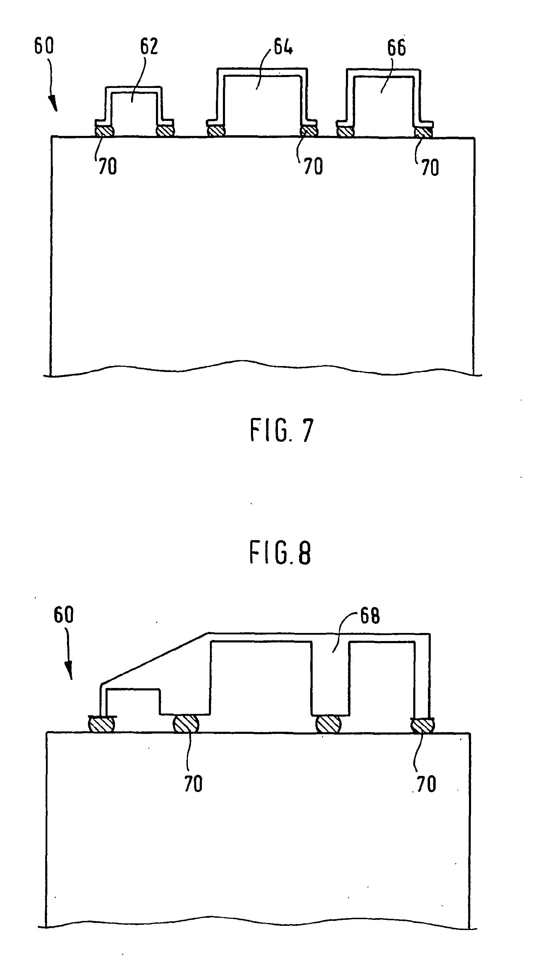

Fig. 7 veranschaulicht, wie drei langgestreckt-wannenförmige Bauteile 62, 64, 66 einen Verteiler für erstes Medium, einen Sammler für zweites Medium und einen Verteiler für Kühlmittel bilden; die Begriffe "Verteiler" und "Sammler" beziehen sich darauf, dass jedes der Bauteile 62, 64, 66 mehrere Strömungspforten 50 bzw. 52 bzw. 54 in einem Längsstreifen bedient, der die Stirnseitenabschnitte aller Zellen 2 des Stapels 60 enthält.

An der gegenüberliegenden, in Fig. 7 nicht gezeichneten Seite des Stapels 60 sind analog ein Sammler für erstes Medium, ein Verteiler für zweites Medium und ein Sammler für Kühlmittel vorgesehen. Der Sammler für erstes Medium kann dem gezeichneten Verteiler 62 für erstes Medium "direkt" gegenüberliegen oder "diagonal" gegenüberliegen, was der Medienführung gemäß Fig. 1 entsprechen wurde. Die gleichen Möglichkeiten gelten für Verteiler und Sammler für zweites Medium.

Fig. 8 veranschaulicht, dass man die drei Bauteile 62, 64, 66 zu einem gemeinsamen Bauteil 68, einem mehrfach-wannenförmigen Bauteil 68, zusammenfassen kann.

Die Abdichtung oder vorzugsweise die abdichtende Befestigung der Bauteile 62, 64, 66 oder des gemeinsamen Bauteils 68 an der betreffenden Seite des Stapels 60 ist jeweils durch eine Siliconraupe 70 vorgenommen.

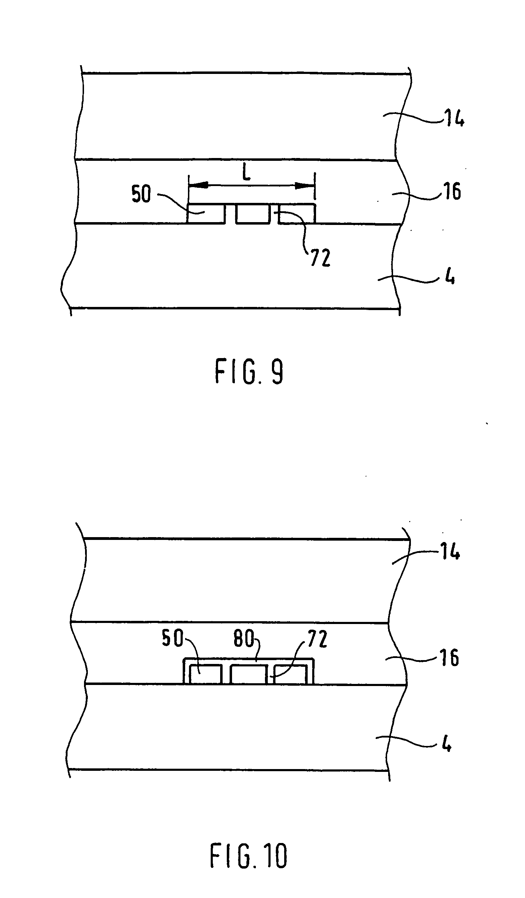

Durch Fig. 9 werden Abstützstege 72 veranschaulicht, welche die Länge L (gemessen in Längsrichtung des Randelements 16) in drei Teillängen (plus die Dicken der Abstützstege 72) unterteilen. Im gezeichneten Fall sind die Abstützstege 72 integral mit der dortigen Platte 4. Alternativ können die Abstützstege 72 integral mit dem Randelement 16 sein. Fig. 9 zeigt die Ausnehmung 50 im Randelement 16. Die zwei angesprochenen Ausführungen sind alternativ auch bei einer Ausnehmung 50 in dem Randbereich der Platte 4 möglich.

Fig. 10 veranschaulicht, wie man bei einer Ausnehmung 50 des Randelements 16 ein Stabilisierungselement 80 vorsehen kann, vorzugsweise aus Kunststoff oder aus korrosionsbeständigem Metall. Das Stabilisierungselement 80 kann U-förmig entsprechend der Querschnittsform der Ausnehmung 50 sein. Im gezeichneten Fall, ist das Stabilisierungselement 80 zugleich ein Abstützelement, welches integral mehrere Abstützstege 72 zur Unterteilung der Länge der Ausnehmung 50 aufweist. Wenn alternativ die Ausnehmung 50 im Randbereich der Platte 4 vorgesehen ist, kann das Stabilisierungselement 80 die Form eines ebenen, dünnen Plättchens haben, ggf. mit integralen Abstützstegen 72.

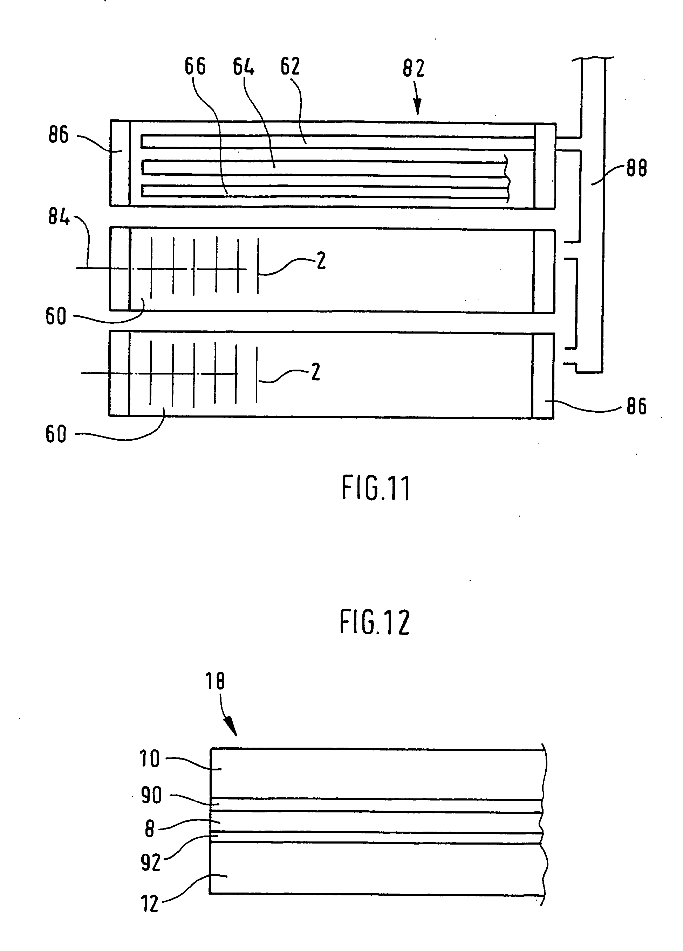

Fig. 11 zeigt eine Brennstoffzellenstapel-Anordnung 82, bei der drei Brennstoffzellenstapel 60, jeweils mit horizontaler Längsachse 84 übereinander positioniert sind. Die einzelnen Zellen 2 jedes Stapels 60 sind mit vertikalen Strichen angedeutet. Jede Zelle 2 ist mit vertikaler Ausrichtung ihrer Membran positioniert.

Mann erkennt Endplatten 86 jedes Stapels 60 und die Längserstreckung der Verteiler bzw. Sammler 62, 64, 66. Die Verteiler bzw. Sammler, die für gleiches Medium vorgesehen sind, sind an eine gemeinsame Leitung 88 angeschlossen, welche die Verteilung bzw. Sammlung für die drei Stapel 60 übernimmt und an eine Gesamt-Medienzuführung bzw. Gesamt-Medienabführung angeschlossen ist.

Fig. 12 veranschaulicht, wie bei der MEA 18 auf jeder Flachseite den Membran 8 zunächst eine Katalysatorschichte 90 bzw. 92 kommt, ehe darüber die erste Gasdeffusionselektrode 10 bzw. die zweite Gasdiffusionselektrode 12 kommt.

Die Anzahl von Zellen 2 in einem Stapel 60 beträgt typischerweise 10 bis 100.

Die erfindungsgemäße Brennstoffzelle kann mit Überdruck an der Anodenseite und/oder der Kathodenseite betrieben werden.

## Patentansprüche

1. Brennstoffzellenstapel aus mehreren Brennstoffzellen (2), die jeweils aufweisen:
(a) eine Polymerelektrolyt-Membran (8);
(b) eine erste Gasdiffusionselektrode (10) auf der Anodenseite der Membran (8);
(c) eine zweite Gasdiffusionselektrode (12) auf der Kathodenseite der Membran (8);
(d) eine erste Katalysatorbelegung (90) in dem Übergangsbereich zwischen der Membran (8) und der ersten Gasdiffusionselektrode (10);
(e) eine zweite Katalysatorbelegung (92) in dem Übergangsbereich zwischen der Membran (8) und der zweiten Gasdiffusionselektrode (12);
(f) eine erste elektrisch leitende Platte (4) auf der der Membran (8) entgegengesetzten Seite der ersten Gasdiffusionselektrode (10), wobei die erste Platte (4) eine Strömungskanalanordnung (42) für einen oxidierbaren, ersten Reaktanden aufweist;
(g) eine zweite elektrisch leitende Platte (14) auf der der Membran (8) entgegengesetzten Seite der zweiten Gasdiffusionselektrode (12), wobei die zweite Platte (14) eine Strömungskanalanordnung (44) für einen reduzierbaren, zweiten Reaktanden aufweist;
(h) wobei im Bereich des Übergangs zwischen (A) dem Perimeter der Anordnung (18) aus Membran, erster Gasdiffusionselektrode und zweiter Gasdiffusionselektrode, und (B) der ersten und der zweiten Platte ein Randelement (16) vorgesehen ist,
wobei der Brennstoffzellenstapel (60) folgende Merkmale besitzt:
(i) die mehreren Brennstoffzellen (2) sind mit im wesentlichen parallel zueinander liegenden Membranen (8) aneinander gesetzt, wobei sich zwischen zwei benachbarten Anordnungen (18) aus Membran, erster Gasdiffusionselektrode und zweiter Gasdiffusionselektrode jeweils ein Plattenbauteil befindet, welches für eine der zwei anschließenden Brennstoffzellen (2) eine erste Platte (4) darstellt und für die andere der zwei anschließenden Brennstoffzellen (2) eine zweite Platte (14) darstellt;
(k) der Brennstoffzellenstapel (60) ist von demjenigen Typ, bei dem mindestens einer der folgenden vier Räume
(k1) erster Zuführungsraum für Mediumströme in die Strömungskanalanordnungen (42) der ersten Platten (4) der betreffenden Brennstoffzellen (2) hinein;
(k2) erster Abführungsraum für Mediumströme aus den Strömungskanalanordnungen (42) der ersten Platten (4) der betreffenden Brennstoffzellen (2) heraus,
(k3) zweiter Zuführungsraum für Mediumströme in die Strömungskanalanordnungen (44) der zweiten Platten (14) der betreffenden Brennstoffzellen (2) hinein,
(k4) zweiter Abführungsraum für Mediumströme aus den Strömungskanalanordnungen (44) der zweiten Platten (14) der betreffenden Brennstoffzellen (2) heraus,
sich an einer Seite des Brennstoffzellenstapels für mindestens eine Teilanzahl der Brennstoffzellen des Brennstoffzellenstapels außen vor den betreffenden, nach außen gerichteten Stirnseiten (20; 22) der betreffenden Brennstoffzellen (2) erstreckt, wobei die dem betreffenden Raum zugeordneten Mediumströme quer zu den betreffenden Stirnseiten (20; 22) der betreffenden Randelemente der betreffenden Brennstoffzellen (2) strömen;
(l) für den betreffenden Raum weist bei den betreffenden Brennstoffzellen (2) jeweils im Bereich des Übergangs zwischen dem Randelement (16) und der betreffenden Platte (4; 14) mindestens einer der Bestandteile
(l1) Randelement (16),
(l2) Platte (4; 14) in ihrem Randstreifen,
an mindestens einer Stelle eine Ausnehmung auf, die eine lokale Verringerung der Dicke des betreffenden Bestandteils - gemessen rechtwinklig zu der Erstreckungsebene der Membran (8)- darstellt, derart dass eine Strömungspforte (50; 52; 54) zwischen dem betreffenden Raum und der Strömungskanalanordnung (42; 44) der betreffenden Platte (4; 14) gebildet ist;
(m) wobei das unter (I) genannte Randelement (16) mindestens eines der folgenden Ausbildungsmerkmale aufweist:
(m1)das Randelement (16) besitzt mindestens in dem Bereich, wo die Ausnehmung positioniert ist, so viel Steifigkeit, dass es die Ausnehmung ohne erhebliche Verformung überspannt,
(m2)das Randelement (16) ist in dem Bereich, wo die Ausnehmung positioniert ist, mit einem Stabilisierungselement (80) versehen, so dass es die Ausnehmung ohne erhebliche Verformung überspannt.

2. Brennstoffzellenstapel nach Anspruch 1,
**dadurch gekennzeichnet, dass** mindestens eine Strömungspforte auf ihrer Länge, die in Längsrichtung des Randelements gemessen ist, durch mindestens einen Abstützsteg in mehrere Teillängen unterteilt ist.

3. Brennstoffzellenstapel nach Anspruch 2,
**dadurch gekennzeichnet, dass** der Abstützsteg integral an der Platte vorgesehen ist.

4. Brennstoffzellenstapel nach Anspruch 2,
**dadurch gekennzeichnet, dass** der Abstützsteg integral an dem Randelement vorgesehen ist.

5. Brennstoffzellenstapel nach Anspruch 2,
**dadurch gekennzeichnet, dass** der Abstützsteg Teil eines im Bereich der Ausnehmung vorgesetzten Abstützelements ist.

6. Brennstoffzellenstapel nach einem der Ansprüche 1 bis 5,
**dadurch gekennzeichnet, dass** sich der erste Zuführungsraum und der erste Abführungsraum an gegenüberliegenden Seiten des Brennstoffzellenstapels befinden.

7. Brennstoffzellenstapel nach einem der Ansprüche 1 bis 6,
**dadurch gekennzeichnet, dass** sich der zweite Zuführungsraum und der zweite Abführungsraum an gegenüberliegenden Seiten des Brennstoffzellenstapels befinden.

8. Brennstoffzellenstapel nach einem der Ansprüche 1 bis 7,
**dadurch gekennzeichnet, dass** sich der erste Zuführungsraum und der zweite Zuführungsraum an gegenüberliegenden Seiten des Brennstoffzellenstapels befinden.

9. Brennstoffzellenstapel nach einem der Ansprüche 1 bis 8,
**dadurch gekennzeichnet, dass** für mindestens einen der vier genannten Mediumströme mehrere beabstandete Strömungspforten pro Brennstoffzelle vorgesehen sind.

10. Brennstoffzellenstapel nach einem der Ansprüche 1 bis 9,
**dadurch gekennzeichnet, dass** mindestens ein Randelement ein integral angebrachter Bestandteil der Anordnung aus Membran, erster Gasdiffusionselektrode und zweiter Gasdiffusionselektrode ist.

11. Brennstoffzellenstapel nach Anspruch 10,
**dadurch gekennzeichnet, dass** das Randelement in einem Randstreifen der Anordnung die Poren der ersten Gasdiffusionselektrode und der zweiten Gasdiffusionselektrode füllt.

12. Brennstoffzellenstapel nach einem der Ansprüche 1 bis 11,
**dadurch gekennzeichnet, dass** mindestens ein Randelement unter Verwendung mindestens eines der folgenden Stoffe erzeugt worden ist:
ein Epoxidharz,
ein Silicon,
ein Polyesterharz.

13. Brennstoffzellenstapel nach einem der Ansprüche 1 bis 12,
**dadurch gekennzeichnet, dass** mindestens ein Randelement als Dichtelement zum Dichten des Übergangs zwischen dem Randelement und mindestens einer der Platten ausgebildet ist.

14. Brennstoffzellenstapel nach einem der Ansprüche 1 bis 13,
**dadurch gekennzeichnet, dass** mindestens einer der vier genannten Räume durch ein langgestreckt-wannenförmiges Bauteil gebildet ist, das mit seiner offenen Seite einen sich in Längsrichtung des Stapels erstreckenden Längsstreifen überdeckt, der Stirnseitenabschnitte der Teilanzahl der Brennstoffzellen enthält.

15. Brennstoffzellenstapel nach Anspruch 14,
**dadurch gekennzeichnet, dass** sich zwischen dem die offene Seite des langgestreckt-wannenförmigen Bauteils umschließenden Rand und den Stirnseiten der betreffenden Brennstoffzellen eine Dichtung oder eine dichtende Klebung befindet.

16. Brennstoffzellenstapel nach einem der Ansprüche 1 bis 15,
**dadurch gekennzeichnet, dass** zwei der vier genannten Räume an einer Seite des Brennstoffzellenstapels außen vor den Stirnseiten der betreffenden Brennstoffzellen positioniert sind und dass die zwei anderen der vier genannten Räume an der gegenüberliegenden Seite des Brennstoffzellenstapels außen vor den Stirnseiten der betreffenden Brennstoffzellen positioniert sind.

17. Brennstoffzellenstapel nach einem der Ansprüche 1 bis 16,
**dadurch gekennzeichnet, dass** mindestens ein Teil der Plattenbauteile zum Durchströmtwerden mit einem gasförmigen oder flüssigen Kühlmittel ausgebildet ist.

18. Brennstoffzellenstapel nach Anspruch 17,
**dadurch gekennzeichnet, dass** ein gemeinsamer dritter Zuführungsraum außen vor den Stirnseiten der betreffenden Brennstoffzellen, vorzugsweise auch ein gemeinsamer dritter Abführungsraum außen vor den Stirnseiten der betreffenden Brennstoffzellen, für das Kühlmittel für mehrere Plattenbauteile vorgesehen ist.

19. Brennstoffzellenstapel-Anordnung
**dadurch gekennzeichnet, dass** sie mehrere Brennstoffzellenstapel gemäß einem der Ansprüche 1 bis 18, angeordnet mit im wesentlichen parallelen Längsachsen der Stapel, aufweist.

20. Brennstoffzellenstapel-Anordnung nach Anspruch 19,
**dadurch gekennzeichnet, dass** in einer Gruppe von Brennstoffzellenstapeln diejenigen Seiten der Brennstoffzellenstapel, die einer Seite eines benachbarten Brennstoffzellenstapels zugewandt sind, von Zuführungsräumen und Abführungsräumen frei sind.

## Claims

1. Fuel cell stack comprising a plurality of fuel cells (2), each of which has
(a) a polymer electrolyte membrane (8);
(b) a first gas diffusion electrode (10) on the anode side of the membrane (8);
(c) a second gas diffusion electrode (12) on the cathode side of the membrane (8);
(d) a first catalytic coating (90) in the transition region between the membrane (8) and the first gas diffusion electrode (10);
(e) a second catalytic coating (92) in the transition region between the membrane (8) and the second gas diffusion electrode (12);
(f) a first electrically conductive plate (4) on the side of the first gas diffusion electrode (10) remote from the membrane (8), the first plate (4) having a flow channel arrangement (42) for an oxidisable, first reactant;
(g) a second electrically conductive plate (14) on the side of the second gas diffusion electrode (12) remote from the membrane (8), the second plate (14) having a flow channel arrangement (44) for a reducible, second reactant;
(h) an edge element (16) being provided in the region of the transition between (A) the perimeter of the arrangement (18) comprising membrane, first gas diffusion electrode and second gas diffusion electrode and (B) the first and the second plate,
the fuel cell stack (60) having the following features:
(i) the plurality of fuel cells (2) are assembled with their membranes (8) lying substantially parallel to one another, a plate component being located between two adjacent arrangements (18) comprising membrane, first gas diffusion electrode and second gas diffusion electrode, which plate component is the first plate (4) for one of the two adjoining fuel cells (2) and is the second plate (14) for the other of the two adjoining fuel cells (2);
(k) the fuel cell stack (60) is of the type in which at least one of the following four chambers:
(k1) first supply chamber for flows of medium into the flow channel arrangements (42) of the first plates (4) of the fuel cells (2) in question;
(k2) first discharge chamber for flows of medium out of the flow channel arrangements (42) of the first plates (4) of the fuel cells (2) in question;
(k3) second supply chamber for flows of medium into the flow channel arrangements (44) of the second plates (14) of the fuel cells (2) in question;
(k4) second discharge chamber for flows of medium out of the flow channel arrangements (44) of the second plates (14) of the fuel cells (2) in question;
extends along a side of the fuel cell stack, for at least a certain number of the fuel cells of the fuel cell stack, on the outside in front of the respective outwardly directed end faces (20; 22) of the fuel cells (2) in question, the flows of medium associated with the chamber in question flowing transversely with respect to the respective end faces (20; 22) of the respective edge elements of the fuel cells (2) in question;
(l) for the chamber in question, in each of the respective fuel cells (2), in the transition region between the edge element (16) and the respective plate (4; 14), at least one of the following components:
(l1) edge element (16),
(l2) plate (4; 14), in a marginal strip thereof,
has, in at least one place, a recess which - taken at right angles to the plane in which the membrane (8) extends - is a local reduction in the thickness of the component in question so that a flow port (50; 52; 54) is formed between the chamber in question and the flow channel arrangement (42; 44) of the plate (4; 14) in question;
(m) the edge element (16) mentioned under (I) having at least one of the following structural features:
(m1) the edge element (16), at least in the region where the recess is positioned, is sufficiently rigid to span the recess without appreciable deformation;
(m2) the edge element (16), in the region where the recess is positioned, is provided with a stabilising element (80) so that it bridges the recess without appreciable deformation.

2. Fuel cell stack according to claim 1,
**characterized in that** at least one flow port is divided, along its length taken in the longitudinal direction of the edge element, by at least one support rib into a plurality of sub-lengths.

3. Fuel cell stack according to claim 2,
**characterized in that** the support rib is integral with the plate.

4. Fuel cell stack according to claim 2,
**characterized in that** the support rib is integral with the edge element.

5. Fuel cell stack according to claim 2,
**characterized in that** the support rib is part of a support element positioned to the front in the region of the recess.

6. Fuel cell stack according to any one of claims 1 to 5,
**characterized in that** the first supply chamber and the first discharge chamber are located on opposite sides of the fuel cell stack.

7. Fuel cell stack according to any one of claims 1 to 6,
**characterized in that** the second supply chamber and the second discharge chamber are located on opposite sides of the fuel cell stack.

8. Fuel cell stack according to any one of claims 1 to 7,
**characterized in that** the first supply chamber and the second supply chamber are located on opposite sides of the fuel cell stack.

9. Fuel cell stack according to any one of claims 1 to 8,
**characterized in that**, for at least one of the four said flows of medium, a plurality of spaced-apart flow ports is provided per fuel cell.

10. Fuel cell stack according to any one of claims 1 to 9,
**characterized in that** at least one edge element is an integral component of the arrangement comprising membrane, first gas diffusion electrode and second gas diffusion electrode.

11. Fuel cell stack according to claim 10,
**characterized in that** in a marginal strip of the arrangement the edge element fills the pores of the first gas diffusion electrode and the second gas diffusion electrode.

12. Fuel cell stack according to any one of claims 1 to 11,
**characterized in that** at least one edge element has been produced using at least one of the following materials:
an epoxy resin,
a silicone,
a polyester resin.

13. Fuel cell stack according to any one of claims 1 to 12,
**characterized in that** at least one edge element is constructed as a sealing element for sealing the transition between the edge element and at least one of the plates.

14. Fuel cell stack according to any one of claims 1 to 13,
**characterized in that** at least one of the four said chambers is formed by an elongate-trough-shaped component, the open side of which covers a longitudinal strip, extending in the longitudinal direction of the stack, which contains the end face portions of the certain number of fuel cells.

15. Fuel cell stack according to claim 14,
**characterized in that** a seal or an adhesive sealing bond is located between the edge surrounding the open side of the elongate-trough-shaped component and the end faces of the fuel cells in question.

16. Fuel cell stack according to any one of claims 1 to 15,
**characterized in that** two of the four said chambers are positioned on one side of the fuel cell stack on the outside in front of the end faces of the respective fuel cells and the other two of the four said chambers are positioned on the opposite side of the fuel cell stack on the outside in front of the end faces of the respective fuel cells.

17. Fuel cell stack according to any one of claims 1 to 16,
**characterized in that** at least some of the plate components have a construction permitting flow of a gaseous or liquid coolant through them.

18. Fuel cell stack according to claim 17,
**characterized in that** a common third supply chamber is provided on the outside in front of the end faces of the respective fuel cells, and preferably also a common third discharge chamber on the outside in front of the end faces of the respective fuel cells, for the coolant for a plurality of plate components.

19. Fuel cell stack arrangement,
**characterized in that** it has a plurality of fuel cell stacks according to any one of claims 1 to 18, arranged with the longitudinal axes of the stacks substantially parallel.

20. Fuel cell stack arrangement according to claim 19,
**characterized in that**, in a group of fuel cell stacks, the fuel cell stacks are free of supply chambers and discharge chambers on the sides facing a side of an adjacent fuel cell stack.

## Revendications

1. Empilement de piles à combustible constitué de plusieurs piles à combustible (2) qui comportent chacune :
(a) une membrane à électrolyte polymère (8) ;
(b) une première électrode à diffusion gazeuse (10) sur le côté de l'anode de la membrane (8) ;
(c) une deuxième électrode à diffusion gazeuse (12) sur le côté de la cathode de la membrane (8) ;
(d) une première charge de catalyseur (90) dans la zone de transition entre la membrane (8) et la première électrode à diffusion gazeuse (10) ;
(e) une deuxième charge de catalyseur (92) dans la zone de transition entre là membrane (8) et la deuxième électrode à diffusion gazeuse (12) ;
(f) une première plaque électroconductrice (4) sur le côté de la première électrode à diffusion gazeuse (10) opposé à la membrane (8), la première plaque (4) comportant un agencement de canal d'écoulement (42) pour un premier réactant oxydable ;
(g) une deuxième plaque électroconductrice (14) sur le côté de la deuxième électrode à diffusion gazeuse (12) opposé à la membrane (8), la deuxième plaque (14) comportant un agencement de canal d'écoulement (44) pour un deuxième réactant réductible ;
(h) un élément de bord (16) étant prévu dans la zone de transition entre (A) le périmètre de l'agencement (18) constitué de la membrane, de la première électrode à diffusion gazeuse et de la deuxième électrode à diffusion gazeuse et (B) la première et la deuxième plaque,
l'empilement de piles à combustible (60) présentant les caractéristiques suivantes :
(i) les plusieurs piles à combustible (2) sont posées les unes à côté des autres avec les membranes (8) disposées sensiblement parallèlement les unes aux autres, moyennant quoi un élément de plaque, qui constitue une première plaque (4) pour l'une des deux piles à combustible suivantes (2) et une deuxième plaque (14) pour les autres des deux piles à combustible suivantes (2), se trouve entre deux agencements (18) constitués de la membrane, de la première électrode à diffusion gazeuse et de la deuxième électrode à diffusion gazeuse ;
(k) l'empilement de piles à combustible (60) est du type dans lequel au moins l'un des quatre compartiments suivants :
(k1) premier compartiment d'alimentation pour courants de fluide entrant dans les agencements de canal d'écoulement (42) des premières plaques (4) des piles à combustible concernées (2) ;
(k2) premier compartiment d'évacuation pour courants de fluide sortant des agencements de canal d'écoulement (42) des premières plaques (4) des piles à combustible concernées (2) ;
(k3) deuxième compartiment d'alimentation pour courants de fluide entrant dans les agencements de canal d'écoulement (44) des deuxièmes plaques (14) des piles à combustible concernées (2) ;
(k4) deuxième compartiment d'évacuation pour courants de fluide sortant des agencements de canal d'écoulement (44) des deuxièmes plaques (14) des piles à combustible concernées (2),
s'étend d'un côté de l'empilement de piles à combustible pour au moins un nombre partiel des piles à combustible de l'empilement de piles à combustible à l'extérieur devant les faces frontales (20 ; 22) concernées dirigées vers l'extérieur des piles à combustible concernées (2), les courants de fluide associés au compartiment concerné s'écoulant perpendiculairement aux faces frontales (20 ; 22) concernées des éléments de bord concernés des piles à combustible concernées (2) ;
(l) pour le compartiment concerné, pour les piles à combustible concernées (2), au moins l'un des éléments comporte dans la zone de transition entre l'élément de bord (16) et la plaque concernée (4 ; 14)
(l1) un élément de bord (16),
(l2) une plaque (4; 14) dans sa bande latérale, à au moins un endroit, un évidement qui constitue une réduction locale de l'épaisseur du élément concerné - mesurée à angles droits par rapport au plan d'allongement de la membrane (8) - de telle manière qu'une porte d'écoulement (50 ; 52 ; 54) est formée entre le compartiment concerné et l'agencement de canal d'écoulement (42 ; 44) de la plaque concernée (4 ; 14) ;
(m) moyennant quoi l'élément de bord (16) mentionné au poins (l) présente au moins l'une des caractéristiques de configuration suivantes :
(m1) l'élément de bord (16) présente une telle rigidité, au moins dans la zone où est positionné l'évidement, qu'il recouvre l'évidement sans déformation importante,
(m2) l'élément de bord (16) est muni, dans la zone où est positionné l'évidement, d'un élément stabilisateur (80) de sorte qu'il recouvre l'évidement sans déformation importante.

2. Empilement de piles à combustible selon la revendication 1,
**caractérisé en ce qu'**au moins une porte d'écoulement est divisée en plusieurs longueurs partielles par au moins une nervure d'appui sur sa longueur qui est mesurée dans le sens longitudinal de l'élément de bord.

3. Empilement de piles à combustible selon la revendication 2,
**caractérisé en ce que** la nervure d'appui est prévue pour être intégrée dans la plaque.

4. Empilement de piles à combustible selon la revendication 2,
**caractérisé en ce que** la nervure d'appui est prévue pour être intégrée dans l'élément de bord.

5. Empilement de piles à combustible selon la revendication 2,
**caractérisé en ce que** la nervure d'appui fait partie d'un élément d'appui posé en avant dans la zone de l'évidement.

6. Empilement de piles à combustible selon l'une quelconque des revendications 1 à 5,
**caractérisé en ce que** le premier compartiment d'alimentation et le premier compartiment d'évacuation se trouvent sur des côtés opposés de l'empilement de piles à combustible.

7. Empilement de piles à combustible selon l'une quelconque des revendications 1 à 6,
**caractérisé en ce que** le deuxième compartiment d'alimentation et le deuxième compartiment d'évacuation se trouvent sur des côtés opposés de l'empilement de piles à combustible.

8. Empilement de piles à combustible selon l'une quelconque des revendications 1 à 7,
**caractérisé en ce que** le premier compartiment d'alimentation et le deuxième compartiment d'alimentation se trouvent sur des côtés opposés de l'empilement de piles à combustible.

9. Empilement de piles à combustible selon l'une quelconque des revendications 1 à 8,
**caractérisé en ce qu'**il est prévu plusieurs portes d'écoulement espacées pour chaque pile à combustible pour au moins l'un des quatre courants de fluide mentionnés.

10. Empilement de piles à combustible selon l'une quelconque des revendications 1 à 9,
**caractérisé en ce qu'**au moins un élément de bord fait partie intégrante de l'agencement constitué de la membrane, de la première électrode à diffusion gazeuse et de la deuxième électrode à diffusion gazeuse.

11. Empilement de piles à combustible selon la revendication 10,
**caractérisé en ce que** l'élément de bord remplit les pores de la première électrode à diffusion gazeuse et de la deuxième électrode à diffusion gazeuse dans une bande latérale de l'agencement.

12. Empilement de piles à combustible selon l'une quelconque des revendications 1 à 11,
**caractérisé en ce qu'**au moins un élément de bord a été formé en utilisant au moins l'un des matériaux suivants :
une résine époxy,
une silicone,
une résine polyester.

13. Empilement de piles à combustible selon l'une quelconque des revendications 1 à 12,
**caractérisé en ce qu'**au moins un élément de bord est configuré sous forme d'un élément d'étanchéité pour étancher la transition entre l'élément de bord et au moins l'une des plaques.

14. Empilement de piles à combustible selon l'une quelconque des revendications 1 à 13,
**caractérisé en ce qu'**au moins l'un des quatre compartiments mentionnés est formé par un élément allongé en forme de cuvette qui recouvre avec son côté ouvert une bande longitudinale s'étendant dans le sens longitudinal de l'empilement qui contient des segments de faces frontales du nombre partiel des piles à combustible.

15. Empilement de piles à combustible selon la revendication 14,
**caractérisé en ce qu'**une garniture d'étanchéité ou un collage d'étanchéité se trouve entre le bord entourant le côté ouvert de l'élément allongé en forme de cuvette et les faces frontales des piles à combustible concernées.

16. Empilement de piles à combustible selon l'une quelconque des revendications 1 à 15,
**caractérisé en ce que** deux des quatre compartiments sont positionnés sur un côté de l'empilement de piles à combustible à l'extérieur devant les faces frontales des piles à combustible concernées et **en ce que** les deux autres des quatre compartiments sont positionnés sur le côté opposé de l'empilement de piles à combustible à l'extérieur devant les faces frontales des piles à combustible concernées.

17. Empilement de piles à combustible selon l'une quelconque des revendications 1 à 16,
**caractérisé en ce qu'**au moins une partie des éléments de plaques est configurée pour être traversée par un fluide de refroidissement gazeux ou liquide.

18. Empilement de piles à combustible selon la revendication 17,
**caractérisé en ce qu'**il est prévu un troisième compartiment d'alimentation commun à l'extérieur devant les faces frontales des piles à combustible concernées, de préférence, également un troisième compartiment d'évacuation commun à l'extérieur devant les faces frontales des piles à combustible concernées pour le fluide de refroidissement pour plusieurs éléments de plaque.

19. Agencement d'empilements de piles à combustible
**caractérisé en ce qu'**il comprend plusieurs empilements de piles à combustible selon l'une quelconque des revendications 1 à 18, disposé avec les axes longitudinaux des empilements sensiblement parallèles.

20. Agencement d'empilements de piles à combustible selon la revendication 19,
**caractérisé en ce que**, dans un groupe d'empilements de piles à combustible, les côtés des empilements de piles à combustible qui sont dirigés vers un côté d'un empilement de piles à combustible adjacent sont exempts de compartiments d'alimentation et de compartiments d'évacuation.
